# EUROPÄISCHE PATENTSCHRIFT

(11) **EP 2 691 255 B1**
(45) Veröffentlichungstag und Bekanntmachung des Hinweises auf die Patenterteilung: **11.03.2020**
(21) Anmeldenummer: 12718157.6
(22) Anmeldetag: 23.04.2012
(51) Int. Cl.: B60L 15/40, B60M 3/06, B61L 15/00, B61L 23/34, B61L 27/00, B61L 3/00

(54) **VERFAHREN ZUM BETREIBEN SPURGEBUNDENER FAHRZEUGE**
METHOD FOR OPERATING RAILBOUND VEHICLES
PROCÉDÉ DE FONCTIONNEMENT DE VÉHICULES SUR RAILS

(30) Priorität: 04.05.2011 DE 102011075218
(43) Veröffentlichungstag der Anmeldung: 05.02.2014
(73) Patentinhaber: Siemens Mobility GmbH, 81739 München (DE)
(72) Erfinder: ERHARD, Karl-Heinz, 38126 Braunschweig (DE); OECHSNER, Jens-Harro, 38321 Denkte OT Neindorf (DE); SCHMIDTKE, York, 38304 Wolfenbüttel (DE); TIEFTRUNK, Bernd, 38118 Braunschweig (DE)
(86) Internationale Anmeldenummer: PCT/EP2012/057356
(87) Internationale Veröffentlichungsnummer: WO 2012/150143

(56) Entgegenhaltungen:
- DE-A1- 19 654 960
- DE-A1- 19 822 803

## Beschreibung

Bei einem Bremsvorgang eines spurgebundenen Fahrzeugs, bei dem es sich beispielsweise um ein Schienenfahrzeug oder ein spurgeführtes Fahrzeug mit Gummibereifung handeln kann, ist die kinetische Energie des spurgebundenen Fahrzeugs mittels eines Bremssystems oder mehrerer Bremssysteme abzuführen. Während hierbei traditionell eine Umwandlung der kinetischen Energie in Wärme im Vordergrund stand, haben insbesondere vor dem Hintergrund einer hierdurch ermöglichten Verringerung des Energieverbrauchs spurgebundener Fahrzeuge verschleißfreie Verzögerungssysteme in Form der regeneratorischen beziehungsweise elektrodynamischen Bremse, die auch als Netz- oder Nutzbremse bezeichnet wird, zunehmend an Bedeutung gewonnen. Hierbei wird der während des Bremsvorgangs erzeugte Strom beziehungsweise die erzeugte elektrische Energie in die jeweilige Fahrleitung, d.h. beispielsweise eine Oberleitung oder eine Stromschiene, zurückgespeist. Insbesondere im Falle eines Versorgungsnetzes in Form eines Gleichstromnetzes ist es für eine effiziente Energierückgewinnung in der Regel erforderlich, dass die von einem spurgebundenen Fahrzeug in das Netz zurückgespeiste elektrische Energie im Wesentlichen zeitgleich von einem anderen spurgebundenen Fahrzeug - beispielsweise im Rahmen eines Beschleunigungsvorgangs - aufgenommen wird. Aus diesem Grund kommt einer Abstimmung des zukünftigen Fahrbetriebs verschiedener spurgebundener Fahrzeuge für eine effiziente Nutzung der von einem spurgebundenen Fahrzeug im Rahmen eines Bremsvorgangs zurückgespeisten Bremsenergie in der Praxis eine große Bedeutung zu.

Aus der veröffentlichten deutschen Patentanmeldung DE 196 54 960 A1 ist ein Verfahren zum Betreiben spurgebundener Fahrzeuge bekannt, bei dem ein hierarchisch aufgebautes Prozessleitsystem mit drei Ebenen verwendet wird. Dabei nimmt der Leitrechner im Regelbetrieb eine Koordinierung von Abfahr- und Bremsvorgängen von den sich auf der Strecke befindenden Fahrzeugen vor, wodurch eine gleichmäßigere Lastverteilung der einspeisenden Gleichrichter-Unterwerke erreicht wird. Der vorliegenden Erfindung liegt die Aufgabe zugrunde, ein Verfahren zum Betreiben spurgebundener Fahrzeuge anzugeben, das eine zumindest teilweise Nutzung der von einem spurgebundenen Fahrzeug im Rahmen eines Bremsvorgangs zurückgespeisten Bremsenergie durch ein anderes spurgebundenes Fahrzeug ermöglicht und dabei vergleichsweise einfach realisierbar sowie besonders leistungsfähig ist.

Diese Aufgabe wird erfindungsgemäß gelöst durch ein Verfahren nach Anspruch 1.

Das erfindungsgemäße Verfahren zeichnet sich dadurch aus, dass in einem ersten Verfahrensschritt zwischen dem ersten spurgebundenen Fahrzeug und dem zweiten spurgebundenen Fahrzeug Fahrinformationen übermittelt werden. Dabei können die Fahrinformationen, die den Fahrbetrieb zumindest eines der beiden spurgebundenen Fahrzeuge betreffen, sowohl durch eine unidirektionale Übertragung von einem der beiden spurgebundenen Fahrzeuge zu dem anderen spurgebundenen Fahrzeug als auch durch einen bidirektionalen Datenaustausch zwischen den beiden spurgebundenen Fahrzeugen übermittelt werden.

Anhand der zwischen ihnen übermittelten Fahrinformationen ist es den beiden spurgebundenen Fahrzeugen in einem zweiten Verfahrensschritt vorteilhafterweise möglich, ihren zukünftigen Fahrbetrieb derart aufeinander abzustimmen, dass die von dem ersten spurgebundenen Fahrzeug im Rahmen eines Bremsvorgangs zurückgespeiste Bremsenergie zumindest teilweise von dem zweiten spurgebundenen Fahrzeug nutzbar ist. Dies bedeutet, dass die übermittelten Fahrinformationen dazu genutzt werden, dass zumindest eines der beiden spurgebundenen Fahrzeuge seinen zukünftigen Fahrbetrieb im Hinblick darauf anpasst, dass die von dem ersten spurgebundenen Fahrzeug im Rahmen des Bremsvorgangs zurückgespeiste Bremsenergie zumindest teilweise von dem zweiten spurgebundenen Fahrzeug nutzbar ist. Unter Berücksichtigung der jeweiligen Randbedingungen, die beispielsweise durch einen Fahrplan und/oder die jeweilige Streckensignalisierung gegeben sein können, erfolgt hierbei vorzugsweise eine Optimierung dahingehend, dass eine maximale Nutzung der zurückgespeisten Bremsenergie durch das zweite spurgebundene Fahrzeug möglich ist.

Das erfindungsgemäße Verfahren bietet den Vorteil, dass es eine Reduzierung des Gesamtenergieverbrauchs eines Systems mit mehreren spurgebundenen Fahrzeugen ermöglicht. Hiermit unmittelbar verbunden ist eine Senkung der durch den Betrieb der spurgebundenen Fahrzeuge verursachten Treibhausgase sowie der Energiekosten des jeweiligen Verkehrsbetreibers. Darüber hinaus ist das erfindungsgemäße Verfahren insbesondere dahingehend vorteilhaft, dass eine dezentrale Abstimmung des Fahrbetriebs der spurgebundenen Fahrzeuge durch die spurgebundenen Fahrzeuge selbst beziehungsweise entsprechende fahrzeugseitige Steuereinrichtungen der spurgebundenen Fahrzeuge erfolgt. Im Unterschied zu einem alternativ hierzu denkbaren Verfahren, bei dem eine zentrale Abstimmung des Fahrbetriebs der spurgebundenen Fahrzeuge etwa durch eine zentrale Steuereinrichtung in Form einer Leitstelle erfolgt, resultiert hieraus eine erhöhte Verfügbarkeit. So ist das erfindungsgemäße Verfahren auch dann weiterhin anwendbar, wenn einzelne spurgebundene Fahrzeuge beziehungsweise Teile derselben ausfallen, da hierdurch eine Beeinträchtigung des Gesamtsystems dahingehend vermieden wird, dass für weiterhin funktionsfähige spurgebundene Fahrzeuge eine Abstimmung beziehungsweise Synchronisierung des Fahrbetriebs zwecks effizienter Nutzung der zurückgespeisten Bremsenergie weiterhin möglich ist. Vorteilhafterweise ist zur Realisierung des erfindungsgemäßen Verfahrens darüber hinaus keine zusätzliche streckenseitige Infrastruktur erforderlich, so dass diesbezügliche Aufwände und Kosten vermieden werden.

Gemäß dem erfindungsgemäßen Verfahren wird der zukünftige Fahrbetrieb der beiden spurgebundenen Fahrzeuge dadurch aufeinander abgestimmt, dass seitens des ersten und/oder des zweiten spurgebundenen Fahrzeugs eine Fahrkurve, anhand derer der Fahrbetrieb des jeweiligen spurgebundenen Fahrzeugs erfolgt, unter Berücksichtigung der übermittelten Fahrinformationen bestimmt beziehungsweise geändert wird. Dies ist vorteilhaft, da durch eine Anpassung der Fahrkurve des zweiten spurgebundenen Fahrzeugs, d.h. desjenigen Fahrzeugs, welches die von dem ersten spurgebundenen Fahrzeug im Rahmen des Bremsvorgangs zurückgespeiste Bremsenergie zumindest teilweise aufnehmen soll beziehungsweise aufnimmt, eine maximale Nutzung der zurückgespeisten Bremsenergie erreicht werden kann. Dabei kann eine entsprechende Änderung der Fahrkurve des ersten spurgebundenen Fahrzeugs zusätzlich oder alternativ zu der zuvor beschriebenen Änderung der Fahrkurve des zweiten spurgebundenen Fahrzeugs erfolgen. Die Änderung der Fahrkurve des ersten spurgebundenen Fahrzeugs verfolgt hierbei das Ziel, den beispielsweise aufgrund einer in Fahrtrichtung vorausliegenden Haltestelle oder aus sicherungstechnischen Gründen erforderlichen Bremsvorgang zeitlich soweit wie möglich mit dem Energiebedarf des zweiten spurgebundenen Fahrzeugs, der beispielsweise durch einen vorgesehenen Beschleunigungsvorgang verursacht sein kann, zu synchronisieren.

Vorzugsweise kann das erfindungsgemäße Verfahren hierbei derart ausgeführt sein, dass der zukünftige Fahrbetrieb der beiden spurgebundenen Fahrzeuge dadurch aufeinander abgestimmt wird, dass seitens des zweiten spurgebundenen Fahrzeugs ein Zeitpunkt für seine Anfahrt unter Berücksichtigung der übermittelten Fahrinformationen bestimmt beziehungsweise geändert wird. Dies ist vorteilhaft, da eine Anpassung der Fahrkurve des zweiten spurgebundenen Fahrzeugs für den Fall, dass das zweite spurgebundene Fahrzeug beispielsweise an einer Haltestelle oder einem Bahnhof im Wesentlichen abfahrbereit steht, durch eine einen anstehenden Bremsvorgang des ersten spurgebundenen Fahrzeugs berücksichtigende Bestimmung beziehungsweise Änderung des Anfahrtszeitpunkts auf vergleichsweise einfache Art und Weise möglich ist. Hierdurch kann somit der anstehende Beschleunigungsvorgang des zweiten spurgebundenen Fahrzeugs mit dem anstehenden Bremsvorgang des ersten spurgebundenen Fahrzeugs soweit wie möglich synchronisiert werden, um eine möglichst vollständige Nutzung der von dem ersten spurgebundenen Fahrzeug zurückgespeisten Bremsenergie durch das zweite spurgebundene Fahrzeug zu ermöglichen. Vorzugsweise kann das erfindungsgemäße Verfahren auch derart weitergebildet sein, dass seitens des zweiten spurgebundenen Fahrzeugs ein Zeitfenster für seine Anfahrt ermittelt wird und mit den Fahrinformationen eine Angabe zu dem für die Anfahrt ermittelten Zeitfenster von dem zweiten spurgebundenen Fahrzeug an das erste spurgebundene Fahrzeug übermittelt wird. Hierdurch wird es vorteilhafterweise beispielsweise ermöglicht, dass das erste spurgebundene Fahrzeug im Rahmen der Übermittlung der Fahrinformationen für den Fall eine Nachricht an das zweite spurgebundene Fahrzeug überträgt, dass sich aus der Fahrkurve des ersten spurgebundenen Fahrzeugs ergibt, dass eine prognostizierte Fahrkurve des ersten spurgebundenen Fahrzeugs und das Zeitfenster für die Anfahrt des zweiten spurgebundenen Fahrzeugs eine Schnittmenge bilden. Basierend hierauf ist dann eine Abstimmung des zukünftigen Fahrbetriebs der beiden spurgebundenen Fahrzeuge in der Art und Weise möglich, dass die von dem ersten spurgebundenen Fahrzeug im Rahmen des Bremsvorgangs zurückgespeiste Bremsenergie möglichst weitgehend von dem zweiten spurgebundenen Fahrzeug nutzbar ist.

Zusätzlich oder alternativ zu der zuvor beschriebenen bevorzugten Weiterbildung kann das erfindungsgemäße Verfahren vorteilhafterweise auch derart ausgestaltet sein, dass seitens des ersten spurgebundenen Fahrzeugs ein Zeitfenster für einen Bremsvorgang ermittelt wird und mit den Fahrinformationen eine Angabe zu dem für den Bremsvorgang des ersten spurgebundenen Fahrzeugs ermittelten Zeitfenster von dem ersten spurgebundenen Fahrzeug an das zweite spurgebundene Fahrzeug übermittelt wird. In diesem Fall wird somit das zweite spurgebundene Fahrzeug anhand der übermittelten Angabe zu dem für den Bremsvorgang des ersten spurgebundenen Fahrzeugs ermittelten Zeitfenster in die Lage versetzt, eine Abstimmung des zukünftigen Fahrbetriebs der beiden spurgebundenen Fahrzeuge zwecks Optimierung der Nutzung der zurückgespeisten Energie vorzunehmen.

Grundsätzlich kann die Übertragung der Fahrinformationen zwischen den beiden spurgebundenen Fahrzeugen auf beliebige, für sich bekannte Art und Weise erfolgen. Dies schließt beispielsweise eine Übertragung über einen Fahrdraht oder Fahrschienen ein.

Gemäß einer weiteren besonders bevorzugten Ausführungsform des erfindungsgemäßen Verfahrens werden die Fahrinformationen zwischen den beiden spurgebundenen Fahrzeugen funkbasiert übermittelt. Dies ist vorteilhaft, da spurgebundene Fahrzeuge häufig bereits mit Übertragungseinrichtungen zur funkbasierten Übertragung von Daten ausgestattet sind und darüber hinaus eine entsprechende Übertragung vergleichsweise robust und zuverlässig ist.

Vorteilhafterweise kann das erfindungsgemäße Verfahren weiterhin auch derart ausgestaltet sein, dass die Fahrinformationen zwischen den beiden spurgebundenen Fahrzeugen zumindest teilweise per Broadcast übermittelt werden. Dabei wird als Broadcast eine Form der Nachrichten- beziehungsweise Signalübertragung bezeichnet, bei der von dem jeweiligen Sender aus eine ungerichtete, den jeweiligen Empfänger nicht spezifizierende Signalaussendung erfolgt. Gemäß dieser bevorzugten Weiterbildung des erfindungsgemäßen Verfahrens ist es nicht erforderlich, dass alle im Rahmen der Übermittlung der Fahrinformationen übertragenen Nachrichten per Broadcast übermittelt werden; stattdessen ist es beispielsweise ausreichend, dass eine erste zwischen dem ersten und dem zweiten spurgebundenen Fahrzeug übertragene Nachricht per Broadcast übermittelt wird, während gegebenenfalls nachfolgenden Nachrichten den jeweiligen Empfänger eindeutig spezifizieren können. Eine dahingehend zumindest teilweise Übermittlung der Fahrinformationen zwischen den beiden spurgebundenen Fahrzeugen per Broadcast ist vorteilhaft, da die spurgebundenen Fahrzeuge in der Regel zumindest zunächst keine Kenntnis darüber haben werden, welche anderen spurgebundenen Fahrzeuge sich in ihrer räumlichen Nähe aufhalten und gegebenenfalls für eine Abstimmung des Fahrbetriebs zwecks Optimierung der Nutzung zurückgespeister Bremsenergie in Frage kommen könnten. Dadurch, dass im Rahmen der Übermittlung der Fahrinformationen beispielsweise zumindest eine erste übertragene Nachricht per Broadcast übertragen wird, wird somit auch ohne Kenntnis einer Adresse des Empfängers der Nachricht eine Kommunikation zwischen unterschiedlichen spurgebundenen Fahrzeugen ermöglicht.

Vorzugsweise kann das erfindungsgemäße Verfahren auch derart weitergebildet sein, dass zumindest ein weiteres spurgebundenes Fahrzeug in die Übermittlung der Fahrinformationen und in die Abstimmung des zukünftigen Fahrbetriebs einbezogen wird. Dies bedeutet, dass beispielsweise auch drei oder mehr spurgebundene Fahrzeuge Fahrinformationen untereinander übermitteln und ihren zukünftigen Fahrbetrieb aufeinander abstimmen können. In Abhängigkeit von der Anzahl der berücksichtigten spurgebundenen Fahrzeuge sowie den jeweiligen Umständen ist hierbei gegebenenfalls durch geeignete Algorithmen ein zuverlässiger und ausreichend schneller Abstimmungsvorgang zwischen den beteiligten spurgebundenen Fahrzeugen sicherzustellen. Ziel der Abstimmung ist es hierbei, eine bestmögliche Nutzung im Rahmen von Bremsvorgängen zurückgespeister Bremsenergie zu gewährleisten. So ist es beispielsweise denkbar, dass Beschleunigungsvorgänge des zweiten spurgebundenen Fahrzeugs sowie eines weiteren spurgebundenen Fahrzeugs zeitlich derart aufeinander abgestimmt werden, dass die von dem ersten spurgebundenen Fahrzeug im Rahmen des Bremsvorgangs zurückgespeiste Bremsenergie zunächst von dem zweiten spurgebundenen Fahrzeug und anschließend von dem weiteren spurgebundenen Fahrzeug genutzt wird. Alternativ hierzu besteht beispielsweise auch die Möglichkeit, dass zwischen dem ersten spurgebundenen Fahrzeug, dem zweiten spurgebundenen Fahrzeug und einem weiteren Fahrzeug, für das ein Bremsvorgang ansteht, eine Abstimmung beziehungsweise Synchronisierung in der Weise erfolgt, dass von dem zweiten spurgebundenen Fahrzeug zunächst die zurückgespeiste Bremsenergie des ersten spurgebundenen Fahrzeugs und anschließend beziehungsweise ganz oder teilweise auch gleichzeitig die Bremsenergie des weiteren spurgebundenen Fahrzeugs nutzbar ist.

Im Folgenden wird die Erfindung anhand eines Ausführungsbeispiels näher erläutert. Hierzu zeigt die
- Figur: zur Erläuterung eines Ausführungsbeispiels eines erfindungsgemäßen Verfahrens eine Anordnung mit drei spurgebundenen Fahrzeugen.

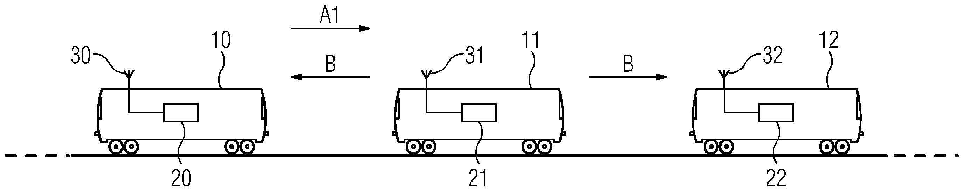

In der Figur sind spurgebundene Fahrzeuge 10, 11 und 12 erkennbar, bei denen es sich beispielsweise um Schienenfahrzeuge in Form von Metros, U-Bahnen oder sonstigen Nahverkehrszügen handeln kann. Die spurgebundenen Fahrzeuge 10, 11, 12 weisen jeweils eine fahrzeugseitige Steuereinrichtung 20, 21 beziehungsweise 22 auf, an die jeweils eine fahrzeugseitige Übertragungseinrichtung 31, 32 beziehungsweise 33 angebunden ist. Mittels der fahrzeugseitigen Übertragungseinrichtungen 31, 32, 33 ist hierbei eine funkbasierte Kommunikation zwischen den fahrzeugseitigen Steuereinrichtungen 20, 21, 22 möglich; darüber hinaus können die fahrzeugseitigen Übertragungseinrichtungen 31, 32, 33 gegebenenfalls weiterhin auch zur funkbasierten Kommunikation der fahrzeugseitige Steuereinrichtung 20, 21, 22 beziehungsweise der spurgebundenen Fahrzeuge 11, 12, 13 mit streckenseitigen Komponenten, beispielsweise in Form einer Leitstelle oder eines Stellwerks, dienen.

Es sei angenommen, dass auf den fahrzeugseitigen Steuereinrichtungen 20, 21, 22 als ATO (Automatic Train Operation) bezeichnete Komponenten zur Steuerung des jeweiligen spurgebundenen Fahrzeugs 10, 11 beziehungsweise 12 vorhanden beziehungsweise realisiert sind. Herkömmlicherweise arbeiten die entsprechenden Komponenten autark beziehungsweise unabhängig voneinander auf dem jeweiligen spurgebundenen Fahrzeug 10, 11 beziehungsweise 12, indem sie aufgrund der Fahrplanlage, der topologischen Information sowie der Fahrzeugeigenschaften eine energetisch optimierte Fahrkurve bis zum nächsten Gefahrenpunkt berechnen. Eine Abstimmung zwischen den einzelnen fahrzeugseitigen Steuereinrichtungen 20, 21, 22 beziehungsweise den jeweiligen ATOs ist hierbei jedoch nicht vorgesehen.

Im Rahmen des beschriebenen Ausführungsbeispiels des erfindungsgemäßen Verfahrens werden die spurgebundenen Fahrzeuge 10, 11 und 12 nun derart betrieben, dass zwischen einem ersten spurgebundenen Fahrzeug in Form des spurgebundenen Fahrzeugs 10 und einem zweiten spurgebundenen Fahrzeug in Form der spurgebundenen Fahrzeugs 11 den zukünftigen Fahrbetrieb zumindest eines der spurgebundenen Fahrzeuge 10 und 11 betreffende Fahrinformationen übermittelt werden. Dies bedeutet, dass mittels an die jeweiligen fahrzeugseitigen Steuereinrichtungen 20, 21 angebundener fahrzeugseitiger Übertragungseinrichtungen 30, 31 eine Kommunikation zwischen den fahrzeugseitigen Steuereinrichtungen 20, 21 erfolgt. Hierdurch wird es vorteilhafterweise ermöglicht, im Rahmen der Bestimmung der Fahrkurve der spurgebundenen Fahrzeuge 10, 11 gegebenenfalls dahingehend eine übergeordnete Abstimmung zwischen den spurgebundenen Fahrzeugen 10, 11 vorzunehmen, dass eine Maximierung von Rückspeiseeffekten möglich ist. Hierzu werden die Fahrinformationen zwischen den spurgebundenen Fahrzeugen 10 und 11 übermittelt und anschließend der zukünftige Fahrbetrieb der beiden spurgebundenen Fahrzeuge 10 und 11 anhand der zwischen ihnen übermittelten Fahrinformationen derart aufeinander abgestimmt, dass die von dem ersten spurgebundenen Fahrzeug 10 im Rahmen eines Bremsvorgangs zurückgespeiste Bremsenergie zumindest teilweise von dem zweiten spurgebundenen Fahrzeug 11 nutzbar ist.

Die Übermittlung der Fahrinformationen, d.h. die Übertragung von Informationen zwischen den fahrzeugseitigen Steuereinrichtungen 20, 21 der spurgebundenen Fahrzeuge 10, 11 beziehungsweise der zugehörigen ATOs kann beispielsweise derart erfolgen, dass seitens des zweiten spurgebundenen Fahrzeugs 11, von dem angenommen sei, dass es abfahrbereit an einer Haltestelle steht, ein potenzielles Abfahrtszeitfenster, d.h. ein Zeitfenster für eine Anfahrt, ermittelt wird, und mit den Fahrinformationen eine Angabe zu den für die Anfahrt ermittelten Zeitfenster von dem zweiten spurgebundenen Fahrzeug 11 an das erste spurgebundene Fahrzeug 10 übermittelt wird. Im Rahmen des beschriebenen Ausführungsbeispiels erfolgt die Übermittlung der Angabe zu dem für die Anfahrt ermittelten Zeitfenster hierbei mittels einer Broadcast-Nachricht B, die von der fahrzeugseitigen Steuereinrichtung 21 des spurgebundenen Fahrzeugs 11 veranlasst von der fahrzeugseitigen Übertragungseinrichtung 31 ausgesendet wird. Mittels der Broadcast-Nachricht beziehungsweise dem Broadcast-Signal B fragt somit die fahrzeugseitige Steuereinrichtung 21 beziehungsweise die zugehörige ATO des spurgebundenen Fahrzeugs 11 bei räumlich naheliegenden spurgebundenen Fahrzeugen an, ob deren prognostizierten Bremskurven in dem angefragten Zeitfenster eine Schnittmenge mit dem für die Anfahrt ermittelten Zeitfenster bilden.

Im Rahmen des beschriebenen Ausführungsbeispiels sei angenommen, dass dies in Bezug auf das erste spurgebundene Fahrzeug 10 der Fall ist, so dass im Rahmen der Übermittlung beziehungsweise des Austauschs der Fahrinformationen von dem ersten spurgebundenen Fahrzeug 10 mittels der fahrzeugseitigen Übertragungseinrichtung 30 ein Antwort-Signal A an das zweite spurgebundene Fahrzeug 11 übermittelt wird.

Anhand der zwischen ihnen mittels der Nachrichten beziehungsweise Signale B und A übermittelten Fahrinformationen ist es den beiden spurgebundenen Fahrzeugen 10 und 11 möglich, ihren zukünftigen Fahrbetrieb derart aufeinander abzustimmen, dass die von dem ersten spurgebundenen Fahrzeug 10 im Rahmen eines Bremsvorgangs zurückgespeiste Bremsenergie zumindest teilweise von dem zweiten spurgebundenen Fahrzeug 11 nutzbar ist. Letztlich besteht das Ziel hierbei unter Berücksichtigung der jeweils zu beachtenden Randbedingungen darin, eine bestmögliche Ausnutzung der Bremsenergie des ersten spurgebundenen Fahrzeugs 10 durch das anfahrende zweite spurgebundene Fahrzeug 11 zu ermöglich. Hierzu wird seitens des ersten spurgebundenen Fahrzeugs 10 und/oder seitens des zweiten spurgebundenen Fahrzeugs 11 die Fahrkurve, anhand derer der Fahrbetrieb des jeweiligen spurgebundenen Fahrzeugs 10 beziehungsweise 11 erfolgt, unter Berücksichtigung der übermittelten Fahrinformationen bestimmt beziehungsweise geändert. Dies kann beispielsweise dadurch geschehen, dass die fahrzeugseitige Steuereinrichtung 21 des abfahrbereiten spurgebundenen Fahrzeugs 11 innerhalb eines Suchraums beziehungsweise Zeitfensters, das beispielsweise 10 s betragen kann, den Anfahrts- beziehungsweise Abfahrtszeitpunkt des spurgebundenen Fahrzeugs 11 derart optimiert, dass die von dem ersten spurgebundenen Fahrzeug 10 zurückgespeiste Energie maximal genutzt werden kann. In Abhängigkeit von der jeweiligen konkreten Realisierung kann es hierbei unter Umständen zweckmäßig sein, dass das erste spurgebundene Fahrzeug 10 eine Liste derjenigen spurgebundenen Fahrzeuge speichert, welche im Rahmen der Übermittlung der Fahrinformationen eine Reservierung von Bremsenergie des ersten spurgebundenen Fahrzeugs vorgenommen haben. Hierdurch kann - sofern dies in Abhängigkeit von der jeweiligen Realisierung beziehungsweise Ausgestaltung im Einzelfall erforderlich ist - vermieden werden, dass zurückgespeiste Energie mehrfach vergeben wird.

In der Figur ist erkennbar, dass das Broadcast-Signal B nicht nur von dem ersten spurgebundenen Fahrzeug 10, sondern darüber hinaus auch von einem weiteren spurgebundenen Fahrzeug 12 empfangen wird. Da für dieses spurgebundene Fahrzeug 12 innerhalb des von dem spurgebundenen Fahrzeug 11 angefragten Zeitfensters kein Bremsvorgang ansteht, sendet das weitere spurgebundene Fahrzeug 12 auf den Empfang des Broadcast-Signals B hin kein Antwort-Signal A an das spurgebundene Fahrzeug 11 zurück. Alternativ hierzu wäre es jedoch auch denkbar, dass im Falle eines anstehenden Bremsvorgangs auch das weitere spurgebundene Fahrzeug 12 in die Abstimmung des Fahrbetriebs eingebunden wird und somit bezogen auf das Gesamtsystem der drei spurgebundenen Fahrzeuge 10, 11 und 12 eine bezogen auf eine Nutzung zurückgespeister Energie bestmögliche Koordinierung beziehungsweise Synchronisierung erfolgt. Alternativ hierzu könnte zusätzlich seitens des weiteren spurgebundenen Fahrzeugs 12 aufgrund eines anstehenden Beschleunigungsvorgangs eine Nutzung von Bremsenergie des ersten spurgebundenen Fahrzeugs 10 möglich sein und durch eine entsprechende Abstimmung zwischen den spurgebundenen Fahrzeugen 10, 11 und 12 realisierbar werden.

Es sei darauf hingewiesen, dass die Übermittlung der Fahrinformationen zwischen den spurgebundenen Fahrzeugen 10, 11 und 12 beziehungsweise ihren fahrzeugseitigen Steuereinrichtungen 20, 21 beziehungsweise 22 selbstverständlich auch auf andere Art und Weise erfolgen kann. So ist es beispielsweise auch denkbar, dass die Übermittlung der Fahrinformationen von dem ersten spurgebundenen Fahrzeug 10 angestoßen wird. Darüber hinaus ist nicht notwendigerweise eine bidirektionale Übermittlung von Fahrinformationen erforderlich; stattdessen ist es beispielsweise auch möglich, dass lediglich das erste spurgebundene Fahrzeug 10 durch Übermittlung der Fahrinformationen an das zweite spurgebundene Fahrzeug 11 den Zeitraum seines vorgesehenen Bremsvorgangs ankündigt und das zweite spurgebundene Fahrzeug 11 seine Fahrkurve hierauf bestmöglich abstimmt. Generell kann eine entsprechende Abstimmung hierbei sowohl durch eine Änderung der Fahrkurve des ersten spurgebundenen Fahrzeugs 10, eine Änderung der Fahrkurve des zweiten spurgebundenen Fahrzeugs 11 oder auch durch eine Änderung der Fahrkurven beider spurgebundener Fahrzeuge 10 und 11 erfolgen.

Entsprechend dem zuvor beschriebenen Ausführungsbeispiel zeichnet sich das erfindungsgemäße Verfahren dadurch aus, dass mittels eines dezentralen Ansatzes eine Maximierung von Rückspeiseeffekten ermöglicht wird. Dabei ist das Verfahren vorteilhafterweise unabhängig von zentralen Steuereinrichtungen und hierdurch verursacht besonders robust und zugleich mit vergleichsweise geringem Aufwand realisierbar.

## Patentansprüche

1. Verfahren zum Betreiben spurgebundener Fahrzeuge (10, 11, 12), wobei
- zwischen einem ersten spurgebundenen Fahrzeug (10) und einem zweiten spurgebundenen Fahrzeug (11) den zukünftigen Fahrbetrieb zumindest eines der beiden spurgebundenen Fahrzeuge (10, 11) betreffende Fahrinformationen übermittelt werden, **dadurch gekennzeichnet, dass**
- die beiden spurgebundenen Fahrzeuge (10, 11) ihren zukünftigen Fahrbetrieb anhand der zwischen ihnen übermittelten Fahrinformationen selbst beziehungsweise entsprechende fahrzeugseitige Steuereinrichtungen der spurgebundenen Fahrzeuge derart aufeinander abstimmen, dass die von dem ersten spurgebundenen Fahrzeug (10) im Rahmen eines Bremsvorgangs zurückgespeiste Bremsenergie zumindest teilweise von dem zweiten spurgebundenen Fahrzeug (11) nutzbar ist, wobei
- der zukünftige Fahrbetrieb der beiden spurgebundenen Fahrzeuge (10, 11) dadurch aufeinander abgestimmt wird, dass seitens des ersten und/oder des zweiten spurgebundenen Fahrzeugs (11) eine Fahrkurve, anhand derer der Fahrbetrieb des jeweiligen spurgebundenen Fahrzeugs (11) erfolgt, unter Berücksichtigung der übermittelten Fahrinformationen bestimmt beziehungsweise geändert wird.

2. Verfahren nach Anspruch 1,
**dadurch gekennzeichnet, dass**
der zukünftige Fahrbetrieb der beiden spurgebundenen Fahrzeuge (10, 11) dadurch aufeinander abgestimmt wird, dass seitens des zweiten spurgebundenen Fahrzeugs (11) ein Zeitpunkt für seine Anfahrt unter Berücksichtigung der übermittelten Fahrinformationen bestimmt beziehungsweise geändert wird.

3. Verfahren nach einem der vorangehenden Ansprüche,
**dadurch gekennzeichnet, dass**
- seitens des zweiten spurgebundenen Fahrzeugs (11) ein Zeitfenster für seine Anfahrt ermittelt wird und
- mit den Fahrinformationen eine Angabe zu dem für die Anfahrt ermittelten Zeitfenster von dem zweiten spurgebundenen Fahrzeug (11) an das erste spurgebundene Fahrzeug (10) übermittelt wird.

4. Verfahren nach einem der vorangehenden Ansprüche,
**dadurch gekennzeichnet, dass**
- seitens des ersten spurgebundenen Fahrzeugs (10) ein Zeitfenster für einen Bremsvorgang ermittelt wird und
- mit den Fahrinformationen eine Angabe zu dem für den Bremsvorgang des ersten spurgebundenen Fahrzeugs (10) ermittelten Zeitfenster von dem ersten spurgebundenen Fahrzeug (10) an das zweite spurgebundene Fahrzeug (11) übermittelt wird.

5. Verfahren nach einem der vorangehenden Ansprüche,
**dadurch gekennzeichnet, dass**
die Fahrinformationen zwischen den beiden spurgebundenen Fahrzeugen (10, 11) funkbasiert übermittelt werden.

6. Verfahren nach einem der vorangehenden Ansprüche,
**dadurch gekennzeichnet, dass**
die Fahrinformationen zwischen den beiden spurgebundenen Fahrzeugen (10, 11) zumindest teilweise per Broadcast übermittelt werden.

7. Verfahren nach einem der vorangehenden Ansprüche,
**dadurch gekennzeichnet, dass** zumindest ein weiteres spurgebundenes Fahrzeug (12) in die Übermittlung der Fahrinformationen und in die Abstimmung des zukünftigen Fahrbetriebs einbezogen wird.

## Claims

1. Method for operating railbound vehicles (10, 11, 12), wherein
- between a first railbound vehicle (10) and a second railbound vehicle (11), driving information relating to the future driving operation of at least one of the two railbound vehicles (10, 11) is transmitted, **characterised in that**
- the two railbound vehicles (10, 11) themselves coordinate their future driving operation on the basis of the driving information transmitted between them or coordinate corresponding on-board control facilities of the railbound vehicles in such a manner that the braking energy fed back by the first railbound vehicle (10) during a braking operation can be used at least partially by the second railbound vehicle (11), wherein
- the future driving operation of the two railbound vehicles (10, 11) is coordinated **in that** the first and/or second railbound vehicle (11) determines or alters a driving curve, on the basis of which the driving operation of the respective railbound vehicle (11) takes place, taking into consideration the transmitted driving information.

2. Method according to claim 1,
**characterised in that**
the future driving operation of the two railbound vehicles (10, 11) is coordinated **in that** the second railbound vehicle (11) determines or alters a time for its start-up, taking into consideration the transmitted driving information.

3. Method according to one of the preceding claims,
**characterised in that**
- the second railbound vehicle (11) ascertains a time slot for its start-up and
- using the driving information, an indication of the time slot ascertained for the start-up is transmitted by the second railbound vehicle (11) to the first railbound vehicle (10).

4. Method according to one of the preceding claims,
**characterised in that**
- the first railbound vehicle (10) ascertains a time slot for a braking operation and
- using the driving information, an indication of the time slot ascertained for the braking operation of the first railbound vehicle (10) is transmitted by the first railbound vehicle (10) to the second railbound vehicle (11).

5. Method according to one of the preceding claims,
**characterised in that**
transmission of the driving information between the two railbound vehicles (10, 11) is radio-based.

6. Method according to one of the preceding claims,
**characterised in that**
the driving information is transmitted between the two railbound vehicles (10, 11) at least partially by means of broadcasting.

7. Method according to one of the preceding claims,
**characterised in that**
at least one additional railbound vehicle (12) is involved in the transmission of the driving information and in the coordination of the future driving operation.

## Revendications

1. Procédé pour faire fonctionner des véhicules (10, 11, 12) guidés sur rails,
dans lequel
- on transmet, entre un premier véhicule (10) guidé sur rails et un deuxième véhicule (11) guidé sur rails, des informations à venir de marche concernant le service conduite-exploitation d'au moins l'un des deux véhicules (10, 11) guidés sur rails,
**caractérisé en ce que**
- les deux véhicules (10, 11) guidés sur rails accordent l'un à l'autre leur service conduite-exploitation à venir à l'aide des informations de marche transmises entre eux elles-mêmes ou entre des dispositifs de commande correspondants du côté des véhicules guidés sur rails, de manière à ce que l'énergie de freinage récupérée dans le cadre d'un freinage par le premier véhicule (10) guidé sur rails puisse être utilisée, au moins en partie, par le deuxième véhicule (11) guidé sur rails,
dans lequel
- on accorde l'un à l'autre le service conduite-exploitation à venir des deux véhicules (10, 11) guidés sur rails par le fait qu'est déterminée ou modifiée, en tenant compte des informations de marche transmises, de la part du premier et/ou du deuxième véhicules (11) guidés sur rails, une courbe de marche, à l'aide de laquelle le service conduite-exploitation du véhicule (11) guidé sur rails respectif s'effectue.

2. Procédé suivant la revendication 1,
**caractérisé en ce que**
l'on accorde l'un à l'autre le service conduite-exploitation à venir des deux véhicules (10, 11) guidés sur rails par le fait que l'on détermine ou l'on modifie, en tenant compte d'une information de marche transmise de la part du deuxième véhicule (11) guidé sur rails, un instant de son départ.

3. Procédé suivant l'une des revendications précédentes,
**caractérisé en ce que**
- l'on détermine, de la part du deuxième véhicule (11) guidé sur rails, un créneau temporel pour son départ et
- par les informations de marche, on transmet une indication sur le créneau temporel déterminé pour le départ du deuxième véhicule (11) guidé sur rails au premier véhicule (10) guidé sur rails.

4. Procédé suivant l'une des revendications précédentes,
**caractérisé en ce que**
- de la part du premier véhicule (10) guidé sur rails, on détermine un créneau temporel d'un freinage et
- par les informations de marche, on transmet, du premier véhicule (10) guidé sur rails au deuxième véhicule (11) guidé sur rails, une indication sur le créneau temporel déterminé pour le freinage du premier véhicule (10) guidé sur rails.

5. Procédé suivant l'une des revendications précédentes,
**caractérisé en ce que**
l'on transmet par radio les informations de marche entre les deux véhicules (10, 11) guidés sur rails.

6. Procédé suivant l'une des revendications précédentes,
**caractérisé en ce que**
l'on transmet, au moins en partie, par radiodiffusion les informations de marche entre les deux véhicules (10, 11) guidés sur rails.

7. Procédé suivant l'une des revendications précédentes,
**caractérisé en ce que**
l'on inclut au moins un autre véhicule (12) guidé sur rails dans la transmission des informations de marche et dans l'accord du service conduite-exploitation à venir.
